# FASCICULE DE BREVET EUROPEEN

(11) **EP 0 664 163 B1**
(45) Date de publication et mention de la délivrance du brevet: **08.09.1999**
(21) Numéro de dépôt: 95400084.0
(22) Date de dépôt: 17.01.1995
(51) Int. Cl.: B05D 5/06, C09D 5/36

(54) **Roue ou élément de carrosserie ou accessoire en métal, pour véhicule automobile, revêtu d'une peinture métallisée irisée et procédé de fabrication**
Rad, Karrosserieteil oder metallische Gegenstände, für Fahrzeuge beschichtet mit metallischem irisierendem Lack und Verfahren zur Herstellung
Wheel, vehicle body element or metallic part, for vehicles, coated with metallic iridescent paint and process for manufacturing it

(30) Priorité: 19.01.1994 FR 9400524
(43) Date de publication de la demande: 26.07.1995
(73) Titulaire: MONTUPET S.A., F-92110 Clichy (FR)
(72) Inventeur: Gaillard, Bruno, F-95490 Vaureal (FR); Massinon, Denis, F-60940 Cinqueux (FR)
(74) Mandataire: Warcoin, Jacques

(56) Documents cités:
- EP-A- 0 388 931
- EP-A- 0 402 181
- EP-A- 0 525 867

## Description

La présente invention concerne un support, notamment une roue de véhicule automobile ou un enjoliveur pour roue de véhicule automobile, revêtu d'une peinture métallisée irisée. Elle concerne également un élément de carrosserie ou un accessoire en métal, pour véhicule automobile, revêtu d'une telle peinture.

Elle concerne enfin un procédé de fabrication d'un tel support.

Les peintures métallisées vernies pour les éléments de carrosserie d'un véhicule automobile ou les accessoires en métal ou les roues de celui-ci sont couramment réalisées par application préalable d'un apprêt anticorrosion par électrophorèse ou poudrage électrostatique suivi d'une cuisson puis application d'une base métallisée formée le plus souvent d'une poudre d'aluminium par projection électrostatique ou pneumatique, et enfin application au pistolet d'un vernis de finition transparent, liquide ou en poudre suivie de la cuisson finale.

Les peintures métallisées vernies sont connues pour présenter une résistance améliorée à la corrosion et au "gravillonnage" par rapport aux peintures communément employées dans ce domaine.

Néanmoins, elles présentent l'inconvénient d'offrir une seule teinte dans les gris, ce qui limite leur diffusion auprès d'une partie des consommateurs.

Il est également apparu depuis quelques années comme substitution aux peintures métallisées vernies, des peintures nacrées dans lesquelles sont incorporées des perles, notamment du mica, enrobées avec des pigments. Ces peintures ont récemment trouvé une application en décoration.

Les supports utilisés pour ce type de peinture sont notamment l'acier et les matières plastiques.

Il serait néanmoins souhaitable de pouvoir disposer de peintures permettant de combiner les avantages propres aux peintures métallisées et ceux liés aux peintures nacrées.

Une solution évidente consisterait à mélanger les perles enrobées avec les pigments de la couche métallisée. Néanmoins, on a constaté que le mélange d'une peinture nacrée avec une base métallisée conduisait à des résultats tout à fait insuffisants.

On connaît en outre par le document EP-A-388 931 un revêtement formé d'une base métallique, ledit revêtement produisant des effets de déplacement de couleurs dichromatiques. Cet effet est rendu possible par une couche supplémentaire transparente ou semi-transparente formée d'un liant organique et d'un pigment ou colorant organique.

Par ailleurs, le document EP-A-402 181 décrit une peinture dont la couche externe est formée d'une peinture transparente recouverte d'une peinture colorée comprenant des pigments.

L'invention a pour objet de proposer une peinture permettant d'obtenir des teintes nacrées tout en conservant et même améliorant les avantages des peintures métallisées. Une résistance élevée à la corrosion et au "gravillonnage" et de façon plus générale aux chocs est maintenue.

L'invention concerne en premier lieu une roue ou tout autre support, revêtu sur au moins une face d'une peinture métallisée irisée selon les caractéristiques de la revendication 1.

Par l'expression "couche interne" on entend la couche qui est directement en contact avec la face considérée du métal, éventuellement, comme cela sera décrit au cours de la description, par l'intermédiaire d'un primaire d'accrochage et/ou d'un apprêt anti-corrosion.

Par l'expression "couche intermédiaire ou externe" on entend la couche qui est directement en contact avec l'extérieur ou qui est recouverte par le vernis de finition. Dans le cas où la couche est recouverte du vernis de finition, elle sera désignée par l'expression "couche externe" alors qu'elle sera désignée par l'expression "couche intermédiaire" lorsqu'elle est recouverte par le vernis.

Par l'expression "produisant une irisation résultant de la diffraction de la lumière" on entendra de façon générale la production de couleurs interférencielles dues à des effets optiques sur la surface des pigments, celles-ci ayant des caractéristiques différentes sous des angles nouveaux différents.

Les supports convenant dans la présente invention sont plus particulièrement les supports métalliques ou les matières plastiques.

Les supports métalliques sont ceux couramment utilisés dans l'industrie automobile ou métallurgique de façon générale, comme les métaux ou les alliages à base de fer, acier, aluminium.

Les supports métalliques subissent en général un traitement de surface avant l'application de la peinture. Ces supports sont notamment les enjoliveurs, les roues en alliage ou les éléments de carrosserie de voiture.

Le vernis externe de finition est notamment à base de vernis acrylique, polyester, mélamine.

Ces vernis sont bien connus de l'homme de métier et ne sont donnés qu'à titre indicatif.

Les couches métallisées à base de pâte d'aluminium et d'un liant organique sont bien connues de l'homme du métier.

La couche intermédiaire ou externe est formée d'un liant organique et de pigments colorés nacrés.

Parmi les liants organiques convenant pour la présente invention, on peut citer à titre indicatif tous les liants bien connus de l'homme de métier à haut extrait sec (notamment ceux connus sous le terme "médium" ou "high solids"). Parmi ceux-ci, il est avantageux de choisir ceux compris dans le groupe constitué par les résines polyuréthane, polyester, mélamine ou acétobutyrate de butyle, polyester, mélamine et d'autres résines communément utilisées dans l'industrie des peintures.

Les pigments, afin de produire le phénomène d'irisation, ont généralement une taille comprise entre 5 et 150 micromètres et sont notamment choisies dans le groupe constitué par les pigments dichroïques ou non, enrichis d'un effet nacré, à haut brillant et intensité de couleur.

Il a été trouvé de façon particulièrement inattendue qu'afin d'obtenir une peinture métallisée irisée, produisant l'effet esthétique optimum allié à une résistance à la corrosion et aux chocs très satisfaisante ladite peinture selon l'invention devait répondre à un certain nombre de caractéristiques objet de la présente invention, prises ou non en combinaison et qui sont énumérées ci-après :
- la proportion en volume des perles par rapport au volume total de la couche intermédiaire ou externe est comprise entre 2 et 25 %.

Lorsque cette proportion se situe au-delà où en-deçà de cette limite, on observe une rapide décroissance de l'effet recherché, ce qui rend la peinture beaucoup moins satisfaisante dans la plupart des applications auxquelles elle est destinée.
- L'épaisseur de la couche intermédiaire ou externe est comprise entre 5 et 20 µm. Cette caractéristique, de préférence mise en combinaison avec la précédente, conduit également aux effets recherchés de façon optimale. De même, l'utilisation d'une épaisseur, en dehors de l'intervalle défini, conduit à des résultats beaucoup moins satisfaisants dans la plupart des applications précitées.
- L'épaisseur de la couche de peinture métallisée est comprise entre 20 et 30 µm.

L'invention a plus particulièrement pour objet une roue de véhicule automobile dont la jante est revêtue d'une peinture métallisée irisée, telle que décrite précédemment, recouverte d'un vernis externe de finition ou un enjoliveur pour une roue de véhicule automobile ainsi revêtu.

L'invention a aussi pour objet un élément de carrosserie ou un accessoire en métal pour véhicule automobile revêtu sur la face externe d'une peinture métallisée irisée telle que décrite précédemment, la peinture métallisée irisée étant elle-même recouverte d'un vernis externe de finition.

L'invention a également pour objet un procédé de fabrication d'un support notamment métallique ou en matière plastique, ou d'un élément de carrosserie ou accessoire en métal ou roue de véhicule automobile caractérisé en ce qu'au moins une face métallique, garnie éventuellement d'un apprêt anti-corrosion et/ou d'un primaire d'accrochage, est revêtue d'une base métallisée composée d'un liant, d'une pâte d'aluminium et d'un véhicule inerte, notamment par projection électrostatique ou pneumatique, en ce que le véhicule inerte est évaporé puis en ce que l'on applique sur la couche interne ainsi formée, un mélange d'une solution composée de liants organiques, de perles nacrées et de diluants, en ce que le diluant est éliminé, en ce que l'on recouvre éventuellement la couche dite intermédiaire d'un vernis de finition et en ce que l'on soumet le support ou la carrosserie ou l'accessoire à une cuisson.

Les procédés pour appliquer l'apprêt anti-corrosion et/ou le primaire d'accrochage sur la face métallique à revêtir de peinture sont bien connus de l'homme de métier. Parmi celles couramment utilisées on peut mentionner l'électrophorèse ou le poudrage électrostatique. La cuisson est effectuée généralement à une température comprise entre 150 et 200 C pendant environ 30 minutes.

La poudre d'aluminium en suspension dans le mélange liants/véhicule inerte est présente généralement à des concentrations en poids variant de 0,05 à 10%.

Les perles nacrées en suspension dans le mélange liants/diluants sont présentes généralement à des concentrations en poids variant de 0,05 à 10%.

Les liants sont choisis à titre indicatif parmi ceux indiqués précédemment.

L'application de la couche métallisée est effectuée par projection électrostatique ou pneumatique de manière connue.

La couche de peinture nacrée, dont la composition est décrite ci-dessus est également appliquée par projection électrostatique ou pneumatique.

De même, le vernis de finition est appliqué de manière connue.

La cuisson est effectuée à une température variant entre 140 et 170°C pendant environ 30 minutes.

La présente invention n'est pas limitée aux variantes exposées ci-dessus et peut notamment s'étendre aux supports métalliques et plastiques destinés à la décoration.

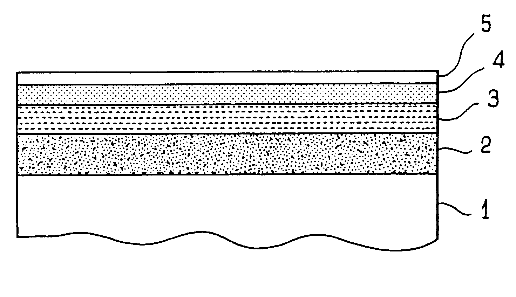

L'invention est maintenant illustrée par l'exemple suivant donné à titre indicatif en relation avec la figure ci-jointe qui est une vue en coupe transversale d'un support métallique selon l'invention.

Le support métallique 1 garni d'un apprêt anti corrosion 2 est revêtu successivement d'une couche interne métallisée 3 puis d'une couche intermédiaire nacrée 4 et enfin d'un vernis 5.

L'épaisseur de la couche interne (base métallisée) est de 20 µm ± 2. Elle est formée de poudre d'aluminium et d'un liant polyuréthane et a été fournie par la Société BASF sous la référence G E 22709 F.

Le vernis présente une épaisseur de 40 µm ± 10 et a été fourni par la Société BASF sous la référence F F 76050 F.

L'objet de l'exemple est d'illustrer l'effet technique d'irisation obtenue avec différentes épaisseurs de peinture nacrée. Cette peinture nacrée a été fournie par la Société BASF sous la référence G E 22 et est à base d'un liant polyuréthane et de perles de mica.

L'influence de l'écart colorimétrique en fonction de l'épaisseur de la couche intermédiaire est mesurée au moyen de l'appareil Colorlab Instrument Optronic par la mesure des indices colorimétriques L*, a*, b*; bien connus de l'homme de métier, suivant trois angles différents de mesure : 25°,45°,110°.

On donne également les variations Δ des différents paramètres.

L'exemple 1 est un exemple comparatif, relatif à un support métallique revêtu d'une peinture nacrée telle que celle indiquée ci-dessus.

L'exemple 2 est un exemple comparatif, relatif à un support métallique revêtu d'une peinture métallisée telle que celle indiquée ci-dessus.

L'exemple 3 est un exemple selon l'invention (Cf figure et description ci-dessus) où la couche intermédiaire nacrée a une épaisseur de 4±2 µm.

L'exemple 4 est un exemple selon l'invention (Cf figure et description ci-dessus) où la couche intermédiaire nacrée a une épaisseur de 6±2 µm.

L'exemple 5 est un exemple selon l'invention (Cf figure et description ci-dessus) où la couche intermédiaire nacrée a une épaisseur de 8±2 µm.

L'exemple 6 est un exemple selon l'invention (Cf figure et description ci-dessus) où la couche intermédiaire nacrée a une épaisseur de 16±2 µm.

L'exemple 7 est un exemple selon l'invention (Cf figure et description ci-dessus) où la couche intermédiaire nacrée a une épaisseur de 20±2 µm.

L'exemple 8 est un exemple selon l'invention (Cf figure et description ci-dessus) où la couche intermédiaire nacrée a une épaisseur de 24±2 µm.

Les résultats sont indiqués dans le tableau ci-après.

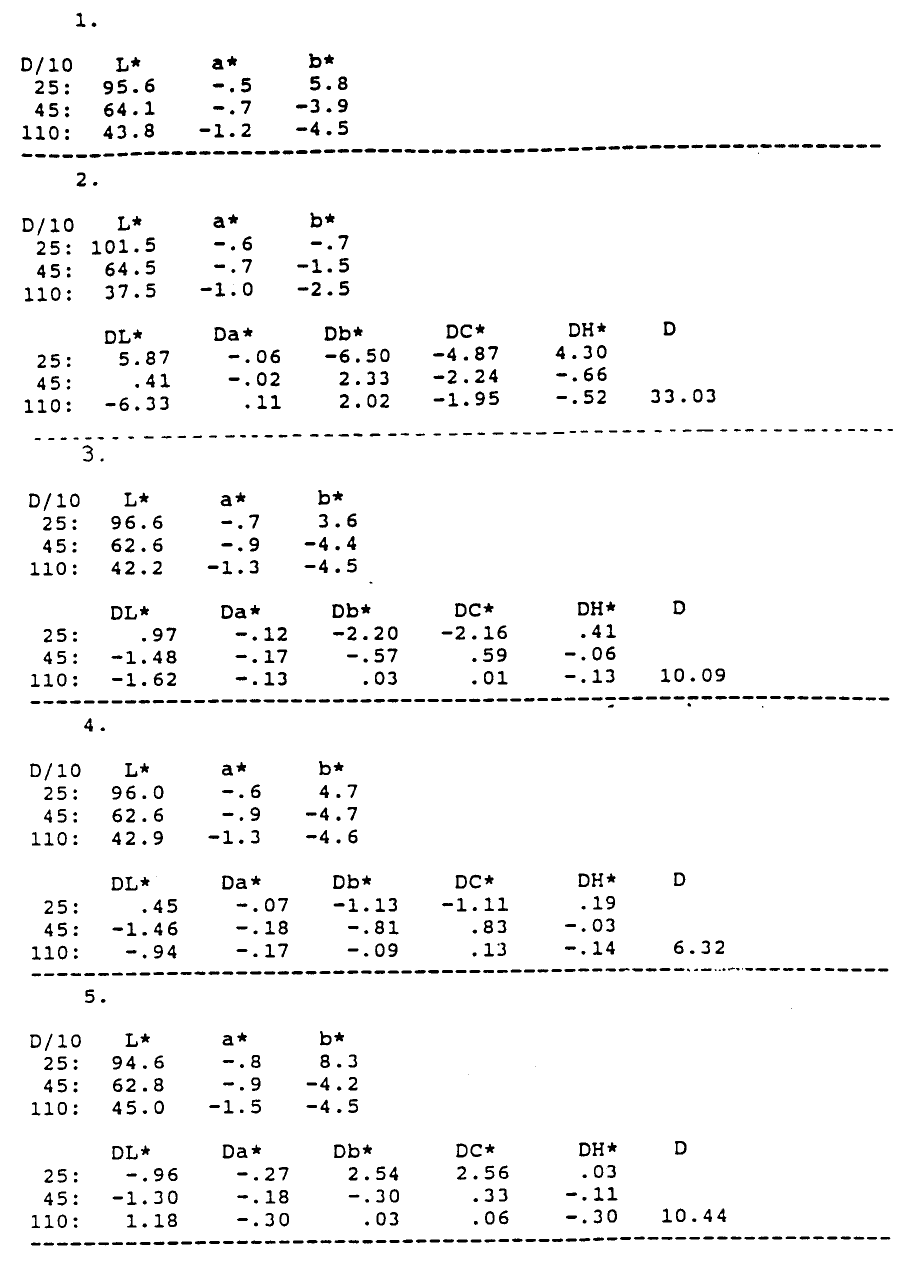

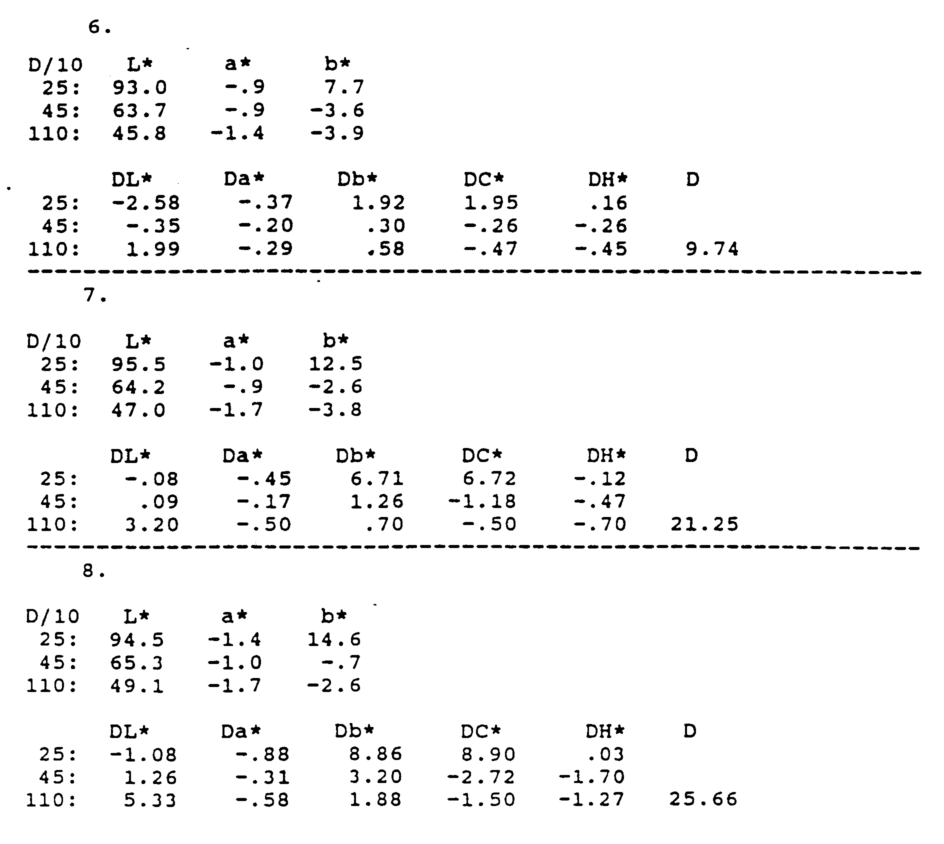

## Revendications

1. Support, notamment métallique ou en matière plastique (1) revêtu sur au moins une face d'une peinture métallisée irisée, caractérisé en ce que ladite peinture est constituée d'une couche interne (3) formée de pigments d'aluminium en pâte et d'un liant organique, d'une couche intermédiaire ou externe (4) formée d'un liant organique et de perles colorées nacrées produisant une irisation résultant de la diffraction de la lumière, ladite couche intermédiaire ou externe ayant une épaisseur comprise entre 5 et 20 micromètres, et, en ce que, éventuellement, un vernis externe (5) de finition recouvre ladite peinture.

2. Support selon la revendication 1, caractérisé en ce que le liant organique est choisi dans le groupe constitué par les résines polyuréthane, polyester, mélamine ou acétobutyrate de butyle, polyester, mélamine.

3. Support selon la revendication 1, caractérisé en ce que les perles ont une taille comprise entre 5 et 150 micromètres et sont notamment choisies dans le groupe constitué par les pigments dichroïques ou non, enrichis d'un effet nacré à haut brillant et intensité de couleur.

4. Support selon la revendication 3, caractérisé en ce que les perles nacrées sont constituées de mica enrobé avec des pigments.

5. Support selon l'une des revendications précédentes, caractérisé en ce que la proportion en volume des perles par rapport au volume total de la couche intermédiaire ou externe est comprise entre 2 et 25 %.

6. Support métallique selon l'une des revendications précédentes, caractérisé en ce la face du support destinée à être revêtue est enduite d'un apprêt anti-corrosion et d'un primaire d'accrochage.

7. Roue de véhicule automobile dont la jante est revêtue d'une peinture métallisée irisée telle que décrite aux revendications 1 à 6, et d'un vernis externe de finition ou un enjoliveur pour une roue de véhicule automobile ainsi revêtu.

8. Carrosserie ou accessoire en métal, pour véhicule automobile, revêtu sur la face externe d'une peinture métallisée, telle que décrite aux revendications 1 à 6, et d'un vernis externe de finition.

9. Procédé de fabrication d'un support selon l'une des revendications 1 à 6 ou d'une carrosserie ou accessoire en métal selon la revendication 8, ou roue de véhicule automobile ou enjoliveur, selon la revendication 7, caractérisé en ce que la face considérée, garnie éventuellement d'un apprêt anti-corrosion et/ou d'un primaire d'accrochage, est revêtue d'une base métallisée composée d'un liant, d'une pâte d'aluminium et d'un véhicule inerte, notamment par projection électrostatique ou pneumatique, en ce que le véhicule inerte est évaporé puis en ce que l'on applique sur la couche interne formée, un mélange d'une solution composée de liants organiques, de perles nacrées et de diluants, en ce que le diluant est évaporé, en ce que l'on recouvre éventuellement la couche dite intermédiaire d'un vernis de finition et en ce que l'on soumet le support ou la carrosserie ou l'accessoire à une cuisson.

## Claims

1. Support, especially a metallic or plastic support (1), coated on at least one face with an iridescent metallic paint, characterized in that the said paint consists of an inner layer (3) formed of paste aluminium pigments and of an organic binder, of an intermediate or outer layer (4) formed of an organic binder and of pearly coloured beads producing an iridescence resulting from the diffraction of light, the said intermediate or outer layer having a thickness of between 5 and 20 micrometers, and in that, optionally, an outer finishing varnish (5) covers the said paint.

2. Support according to Claim 1, characterized in that the organic binder is selected from the group consisting of the resins polyurethane, polyester, melamine or butyl acetobutyrate, polyester, melamine.

3. Support according to Claim 1, characterized in that the beads have a size of between 5 and 150 micrometers and are selected in particular from the group consisting of dichroic or non-dichroic pigments enriched with a nacreous effect possessing high brightness and colour intensity.

4. Support according to Claim 3, characterized in that the pearly beads consist of pigment-coated mica.

5. Support according to one of the preceding claims, characterized in that the proportion by volume of the beads relative to the total volume of the intermediate or outer layer is between 2 and 25%.

6. Metallic support according to one of the preceding claims, characterized in that that face of the support that is to be coated is provided with an anti-corrosion finish and an adhesion primer.

7. Automotive vehicle wheel whose rim is coated with an iridescent metallic paint as described in Claims 1 to 6 and with an outer finishing varnish, or a hub cap for an automotive vehicle wheel thus coated.

8. Bodywork or accessory made of metal for an automotive vehicle, coated on the outer face with a metallic paint as described in Claims 1 to 6 and with an outer finishing varnish.

9. Process for manufacturing a support according to one of Claims 1 to 6 or of bodywork or an accessory made of metal according to Claim 8 or an automotive vehicle wheel or hub cap according to Claim 7, characterized in that the face in question, optionally provided with an anti-corrosion finish and/or an adhesion primer, is coated with a metallic base composed of a binder, an aluminium paste and an inert vehicle, in particular by means of pneumatic or electrostatic spraying, and in that the inert vehicle is evaporated and then in that a mixture of a solution composed of organic binders, pearly beads and diluents is applied to the inner layer formed, in that the diluent is evaporated, in that the said intermediate layer is covered, if desired, with a finishing varnish and in that the support or bodywork or accessory is subjected to a baking operation.

## Patentansprüche

1. Trägermaterial insbesondere aus Metall oder Kunststoff (1), das auf mindestens einer seiner Flächen mit einem metallischen irisierenden Lack beschichtet ist,
**dadurch gekennzeichnet**, **daß**
dieser Lack aus einer inneren Schicht (3), die aus Aluminiumpigmenten in Form einer Paste und einem organischen Binder hergestellt ist, und aus einer Zwischenschicht oder äußeren Schicht (4) zusammengesetzt ist, die aus einem organischen Binder und farbigen perlmuttartigen Perlchen besteht, welche eine irisierende Wirkung erzeugen, die durch die Brechung des Lichtes erzeugt wird, wobei die Zwischenschicht oder äußere Schicht eine Dicke zwischen 5 und 20 mµ hat, und dadurch, daß dieser Lack eventuell mit einem Decklack (5) versehen ist.

2. Trägermaterial nach Anspruch 1,
**dadurch gekennzeichnet**, **daß**
der organische Binder aus der Gruppe der Polyurethanharze, Polyester, Melamine oder Acetobutyratbutyl, Polyester und Melamine ausgewählt wird.

3. Trägermaterial nach Anspruch 1,
**dadurch gekennzeichnet**, **daß**
die Perlchen eine Größe zwischen 5 und 150 mµ haben und insbesondere aus der Gruppe diochroitischer oder nicht diochroitischer Pigmente ausgewählt und eventuell mit einem perlmuttartigen Hochglanzeffekt und hoher Farbintentisität angereichert werden.

4. Trägermaterial nach Anspruch 3,
**dadurch gekennzeichnet**, **daß**
die perlmuttartigen Perlchen aus einem mit Pigmenten umhülltem Glimmer bestehen.

5. Trägermaterial nach einem der vorausgegangenen Ansprüche,
**dadurch gekennzeichnet**, **daß**
der Volumenanteil der Perlchen im Vergleich zu dem Gesamtvolumen der Zwischenschicht oder äußeren Schicht zwischen 2 und 25% liegt.

6. Trägermaterial aus Metall nach einem der vorausgegangenen Ansprüche,
**dadurch gekennzeichnet**, **daß**
auf die Fläche des Trägermaterials, welche beschichtet werden soll, ein Korrosionsschutz und eine Haftschicht aufgetragen werden.

7. Rad eines Kraftfahrzeuges, dessen Felge mit einem irisierenden metallischen Lack nach den Ansprüchen 1 bis 6 beschichtet wird, sowie mit einem Decklack oder einer Zierleiste für das Rad eines Kraftfahrzeuges versehen wird, das auf diese Weise beschichtet wurde.

8. Karosserie oder Zubehörteil aus Metall tur ein Kraftfahrzeug, dessen Außenfläche mit einem metallisierten Lack nach den Ansprüchen 1 bis 6 beschichtet und mit einem Decklack versehen wird.

9. Verfahren für die Herstellung eines Trägermaterials nach einem der Ansprüche 1 bis 6 oder einer Karosserie oder eines Zubehörteils nach Anspruch 8, oder eines Rades eines Kraftfahrzeuges oder einer Zierleiste nach Anspruch 7,
**dadurch gekennzeichnet**, **daß**
die entsprechende Oberfläche, die eventuell mit einem Korrosionsschutz oder einer Haftschicht versehen worden ist, mit einer metallisierenden Grundschicht aus einem Binder, einer Aluminiumpaste und einem inerten Träger beschichtet wird, die insbesondere durch elektrostatischen oder pneumatischen Auftrag hergestellt wird, und dar der inerte Träger verdampft wird, und daß anschließend auf die hergestellte innere Schicht ein Gemisch einer Lösung aus organischen Bindern, perlmuttartigen Perlchen und Verdünnern aufgetragen wird, und dadurch, daß der Verdünner verdampft wird, und dadurch, daß die sogenannte Zwischenschicht mit einem Decklack versehen wird, und dadurch, daß das Trägermaterial, oder die Karosserie oder das Zubehörteil im Ofen ausgehärtet werden.
